# EUROPEAN PATENT SPECIFICATION

(11) **EP 4 454 417 B1**
(45) Date of publication and mention of the grant of the patent: **19.11.2025**
(21) Application number: 22838895.5
(22) Date of filing: 23.12.2022
(51) Int. Cl.: H05B 45/50, H05B 47/24, H05B 47/25

(54) **ELECTRONIC ASSEMBLY FOR AN AUTOMOTIVE LUMINOUS DEVICE AND AUTOMOTIVE LUMINOUS DEVICE**
ELEKTRONISCHE ANORDNUNG FÜR EINE LEUCHTVORRICHTUNG FÜR EIN KRAFTFAHRZEUG UND LEUCHTVORRICHTUNG FÜR EIN KRAFTFAHRZEUG
ENSEMBLE ÉLECTRONIQUE POUR UN DISPOSITIF LUMINEUX D'AUTOMOBILE ET DISPOSITIF LUMINEUX D'AUTOMOBILE

(30) Priority: 26.12.2021 EP 21217761
(43) Date of publication of application: 30.10.2024
(73) Proprietor: VALEO VISION, 93012 Bobigny Cedex (FR)
(72) Inventor: SANTAELLA HERNANDEZ, Juan Jose, 23600 MARTOS (ES); LOPEZ, Juan Antonio, 23600 MARTOS (ES); MORIS GOMEZ, Juan, 23600 MARTOS (ES); GONZALEZ RICO, Alberto, 23600 MARTOS (ES); MONTENEGRO SANCHEZ, Maria Carmen, 23600 MARTOS (ES)
(74) Representative: Valeo Visibility
(86) International application number: PCT/EP2022/087748
(87) International publication number: WO 2023/118573

(56) References cited:
- US-A1- 2016 050 724
- US-A1- 2018 367 028
- US-B1- 10 123 391

## Description

### TECHNICAL FIELD

This invention belongs to the field of the electronic arrangements for controlling automotive light sources.

### STATE OF THE ART

Automotive lighting market can be considered one of the most competitive ones and new lighting functionalities are constantly required. Some customer trends include the use of RGB (Red-Green-Blue) solid-state light sources, such as RGB LEDs (Light Emitting Diodes) to perform the required lighting and signalling functions.

However, these elements, and their drivers, require a special input protection, to avoid transient pulses that overcome the maximum voltage and could thereby damage the elements and their drivers, thus causing a malfunctioning of the system.

Transient voltage suppressors are usually employed in input protection circuits to prevent this to happen. However, these elements are usually heavy, costly and bulky.

US2018/367028 A1 discloses a device for supplying power to an electronic component for motor vehicles.

The present invention provides an alternative arrangement to provide a controlled group of solid-state light sources in an electronic assembly for an automotive luminous device, trying to overcome these drawbacks.

### DESCRIPTION OF THE INVENTION

The invention provides an alternative solution for managing the current needs of the light sources of an automotive luminous device by an electronic assembly for an automotive luminous device, the electronic assembly comprising
- a light source
- a driver configured to control the operation of the light source
- a power supply configured to provide electric supply to the light source and to the driver; and
- an input protection circuit arranged between the power supply and the light source, the input protection circuit being intended to limit the transient voltage and/or current received by the light source and/or by the driver and comprising a protection input and a protection output
wherein
- the protection input and the protection output are connected by the interposition of a group of a resistor and a diode connected in series, the diode comprising an anode terminal and a cathode terminal,
- the diode's anode terminal is connected to the protection input directly or through the resistor
- a node between the protection input and the resistor group is connected to the ground through a first capacitor and
- a node between the resistor group and the protection output is connected to the ground through a second capacitor.

This automotive luminous device is configured to filter all dangerous pulses, without the need of a proper transient voltage suppressor, which is a costly and bulky element, which takes much room in the substrate. This question is critical for interior lighting RGB modules.

The diode's anode terminal being connected to the protection input allows current to flow freely towards the module driver while protecting the driver from current inversion.

Preferably, the diode's cathode terminal is connected to the protection output directly through the resistor.

In some particular embodiments, the resistor is located closest to the protection output than the diode.

This advantageous location, with the resistor located after the diode, in the current direction, offers a particularly better behaviour for negative pulses. However, a different arrangement between the resistor and the diode is also suitable.

When the resistor is located closest to the protection output than the diode, it is preferable that the diode's anode is connected to the protection circuit input, the diode's cathode is connected to the resistor, and the resistor is connected to the protection circuit output.

In some particular embodiments, the first capacitor has a capacitor value higher than 47 nF, and particularly equal or higher than 68 nF and particularly equal or higher than 100 nF.

These values are enough to provide protection against electrostatic discharges.

In some particular embodiments, the second capacitor has a capacitor value equal or higher than 2.2 µF, and particularly equal or higher than 4.7 µF.

These high values, compared with known systems, are intended to provide protection against the dangerous pulses without the need of a transient voltage suppressor.

In some particular embodiments, the resistor has a resistor value comprised between 10 and 40 Ω.

In steady state regime, a high resistor value is advantageous for providing a power sharing between the driver and the resistor. Hence, the driver is able to provide higher current to the load (LED), increasing therefore its power delivery capability since the extra heat dissipation, due to voltage increase at the power supply, is shared between the resistor and the driver.

However, a lower resistor value is advantageous for reducing the voltage drop at the resistor, offering the possibility to the system to work at low voltage values from the power supply due to some specific pulses like the cold start, which voltage could decrease to 6 V in a transient period. The claimed range offers an advantageous compromise.

In some particular embodiments, the driver is a DC/DC driver.

In some particular embodiments, the driver is a linear driver.

A linear driver is a simple element which can manage the operation of a single LED.

In some particular embodiments, the light source is a solid-state light source.

The terms "solid state" refer to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the lifespan of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

In some particular embodiments, the light source comprises at least one RGB LED.

RGB LEDs are useful to provide different colours with a single element. These elements can also be managed by linear drivers.

The invention is particularly adapted for powering RGB LEDs that require relatively low power compared with usual automotive lighting applications. In particular, the invention is best suited for interior lighting wherein the RGB LEDs can be used in accordance to colour regulations existing in the automotive lighting field that restrict the colour of lighting on the outside of the vehicle. On the other hand, no such regulation exists on interior lighting.

Moreover, interior lighting uses relatively low currents compared with exterior lighting. This implies similarly low power dissipation by Joule effect on the resistor group that is put in series in the input protection circuit and therefore in series with the current powering the driver. In higher power applications, for instance some exterior lighting applications, such a design would imply high power dissipation, which may render the protection circuit unsuitable in that case.

In a further inventive aspect, the invention provides an automotive luminous device comprising an electronic assembly according to the first inventive aspect, and an optical element arranged to project the light emitted by the light source.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a scheme of an electronic assembly according to the invention.
Figure 2 shows an electric scheme of a protection input circuit comprised in a particular embodiment of an electronic arrangement according to the invention.
Figure 3 shows an automotive vehicle comprising an interior luminous device with such an electronic arrangement.

In these figures, the following reference numbers are used for each of the following elements:
- 1: LED
- 2: Input protection circuit
- 21: Protection input
- 22: Protection output
- 23: Resistor
- 24: Diode
- 25: First capacitor
- 26: Second capacitor
- 3: Driver
- 4: Power source
- 10: Automotive luminous device
- 100: Automotive vehicle

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

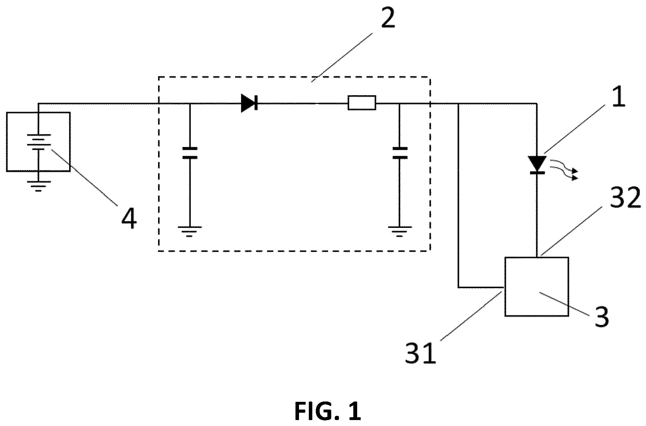

Figure 1 shows a scheme of an electronic assembly according to the invention.

In this figure, a driver element 3 is configured to control the operation of an RGB LED 1.

The driver element 3 receives two inputs: a power input 31 coming from an input protection circuit 2 and a control input 32 intended to control the operation of the RGB LED 1.

The input protection circuit 2 in turn receives the power supply of a power source 4, which comes from the battery of the vehicle.

The input protection circuit 2 is therefore arranged to eliminate every dangerous pulse that may come from the power supply so that, neither the driver nor the LED receive any current or voltage pulse.

As may be seen in this figure, the input protection circuit comprises a protection input 21 receiving the power supply and a protection output 22 connected to the parallel connection of the driver and the light source. Hence, the input protection circuit 2 acts over both the LED 1 and the driver 3.

The driver is a linear driver especially adapted to control the operation of the RGB LED 1.

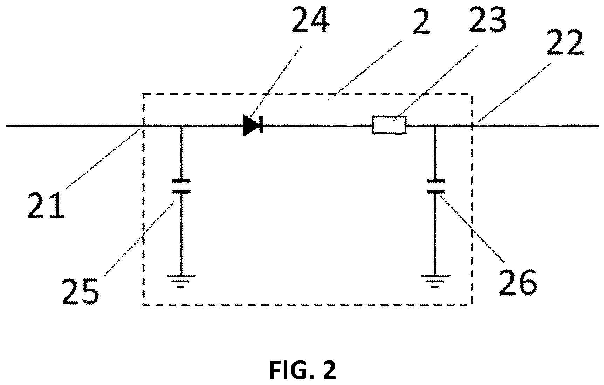

Figure 2 shows an electric scheme of a protection input circuit comprised in a particular embodiment of an electronic arrangement according to the invention.

In this figure, the protection input 21, receiving the power supply, and the protection output 22, connected to the parallel connection of the driver and the LED, are shown.

Between the protection input 21 and the protection output 22, there is a group of a resistor 23 and a diode 24. In this case, the resistor 23 is located after the diode 24, for a better behaviour of the arrangement against negative pulses. However, in different embodiments, the diode 24 could be located after the resistor 23.

The input protection circuit further comprises a first capacitor 25 and a second capacitor 26. A node between the protection input 21 and the resistor group is connected to the ground through a first capacitor 25 and a node between the resistor group and the protection output 22 is connected to the ground through a second capacitor 26.

The first capacitor has a capacitor value of 2.2 µF, while the second capacitor has a capacitor value of 4.7 µF. The resistor has a resistor value of 33 Ω. With these values, the dangerous pulses are avoided, and the operation of the circuit is perfectly customized to control the operation of the RGB LED 1 by means of the driver 3. These values are mere illustrative values and will depend on the specifications of car manufacturers and on the local regulations.

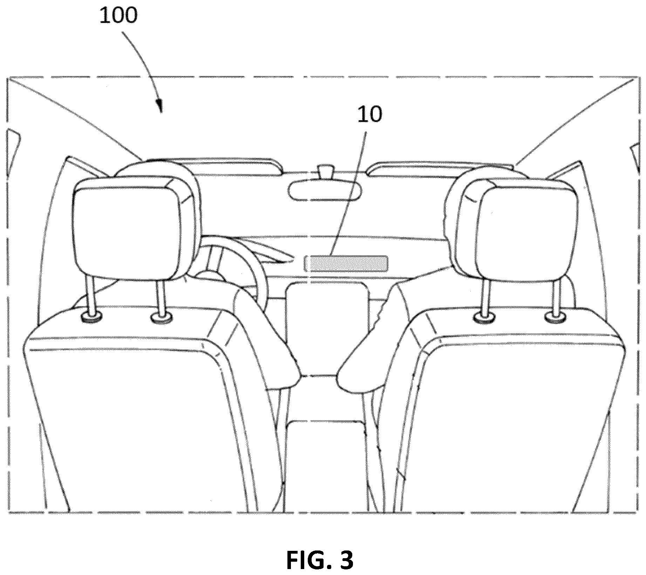

Figure 3 shows an automotive vehicle 100 comprising an interior luminous device 10 with such an electronic arrangement and an optical lens to project the light emitted by the RGB LED.

## Claims

1. Electronic assembly for an automotive luminous device (10), the electronic
assembly comprising
- a light source (1)
- a driver (3) configured to control the operation of the light source (1), the driver (3) comprising a driver power input and a driver control input, wherein the light source is electrically connected to the driver control input;
- a power supply (4) configured to provide electric supply to the light source and to the driver; and
- an input protection circuit (2) arranged between the power supply and the light source (1), the input protection circuit (2) being intended to limit the transient voltage and/or current received by the light source and/or by the driver and comprising a protection input (21) and a protection output (22)
wherein
- the protection input (21) and the protection output (22) are connected by the interposition of a resistor group comprising a resistor (23) and a diode (24) connected in series, the diode (24) comprising an anode terminal and a cathode terminal,
and **characterised in that**:
- the diode's anode terminal is connected to the protection input directly or through the resistor,
- a node between the protection input (21) and the resistor group is connected to the ground through a first capacitor (25) and
- a node between the resistor group and the protection output (22) is connected to the ground through a second capacitor (26).

2. Electronic assembly according to claim 1, wherein the input protection circuit (2) is also located between the power supply and the driver power input.

3. Electronic assembly according to any of the preceding claims, wherein the first capacitor (25) has a capacitor value higher than 47 nF, and particularly equal or higher than 68 nF and particularly equal or higher than 100 nF.

4. Electronic assembly according to any of the preceding claims, wherein the second capacitor (26) has a capacitor value equal or higher than 2.2 µF, and particularly equal or higher than 4.7 µF.

5. Electronic assembly according to any of the preceding claims, wherein the resistor (23) has a resistor value comprised between 10 and 40 Ω.

6. Electronic assembly according to any of the preceding claims, wherein the driver is a DC/DC driver.

7. Electronic assembly according to any of claims 1 to 5, wherein the driver is a linear driver.

8. Electronic assembly according to any of the preceding claims, wherein the light source is a solid-state light source.

9. Electronic assembly according to any of the preceding claims, wherein the light source comprises at least one RGB LED (1).

10. Electronic assembly according to any of the preceding claims, wherein the resistor is located closest to the protection output than the diode.

11. Automotive luminous device (100) comprising
an electronic assembly according to any of the preceding claims; and
an optical element arranged to project the light emitted by the light source.

## Patentansprüche

1. Elektronische Baugruppe für eine Leuchtvorrichtung (10) in einem Kraftfahrzeug, wobei die elektronische Baugruppe umfasst
eine Lichtquelle (1)
einen Treiber (3), der so konfiguriert ist, dass er den Betrieb der Lichtquelle (1) steuert, wobei der Treiber (3) einen Treiber-Stromeingang und einen Treiber-Steuereingang umfasst, wobei die Lichtquelle elektrisch mit dem Treiber-Steuereingang verbunden ist;
eine Stromversorgung (4), die so konfiguriert ist, dass sie die Lichtquelle mit Strom versorgt
und den Treiber mit Strom zu versorgen; und
eine Eingangsschutzschaltung (2), die zwischen der Stromversorgung und der Lichtquelle (1) angeordnet ist, wobei die Eingangsschutzschaltung (2) dazu bestimmt ist, die von der Lichtquelle und/oder dem Treiber empfangene transiente Spannung und/oder den empfangenen transienten Strom zu begrenzen
Treiber empfangen wird, und die einen Schutzeingang (21) und einen Schutzausgang (22) umfasst
Wobei
- Der Schutzeingang (21) und der Schutzausgang (22) sind durch eine Widerstandsgruppe verbunden, die einen Widerstand (23) und eine Diode (24) umfasst, die in Reihe geschaltet sind, wobei die Diode (24) einen Anodenanschluss und einen Kathodenanschluss umfasst,
und **dadurch gekennzeichnet, dass**:
- der Anodenanschluss der Diode direkt oder über den Widerstand mit dem Schutzeingang verbunden ist,
- ein Knotenpunkt zwischen dem Schutzeingang (21) und der Widerstandsgruppe über einen ersten Kondensator (25) mit Masse verbunden ist und
- ein Knotenpunkt zwischen der Widerstandsgruppe und dem Schutzeingang (22) über einen zweiten Kondensator (26) mit Masse verbunden.

2. Elektronische Baugruppe nach Anspruch 1, wobei sich die Eingangsschutzschaltung (2) ebenfalls zwischen der Stromversorgung und dem Treiber-Stromeingang befindet.

3. Elektronische Baugruppe nach einem der vorstehenden Ansprüche, wobei der erste Kondensator (25) einen Kondensatorwert von mehr als 47 nF und insbesondere gleich oder höher als 68 nF und insbesondere gleich oder höher als 100 nF ist.

4. Elektronische Baugruppe nach einem der vorstehenden Ansprüche, wobei der zweite Kondensator (26) einen Kondensatorwert von mindestens 2,2 pF und insbesondere von mindestens 4,7 pF aufweist.

5. Elektronische Baugruppe nach einem der vorstehenden Ansprüche, wobei der Widerstand (23) einen Widerstandswert zwischen 10 und 40 0 aufweist.

6. Elektronische Baugruppe nach einem der vorstehenden Ansprüche, wobei der Treiber ein DC/DC-Treiber ist.

7. Elektronische Baugruppe gemäß einem der Ansprüche 1 bis 5, wobei der Treiber ein linearer Treiber ist.

8. Elektronische Baugruppe nach einem der vorstehenden Ansprüche, wobei die Lichtquelle eine Festkörperlichtquelle ist.

9. Elektronische Baugruppe nach einem der vorstehenden Ansprüche, wobei die Lichtquelle mindestens eine RGB-LED (1) umfasst.

10. Elektronische Baugruppe nach einem der vorstehenden Ansprüche, wobei der Widerstand näher am Schutzausgang angeordnet ist als die Diode.

11. Fahrzeugbeleuchtungsvorrichtung (100) mit
eine elektronische Baugruppe gemäß einem der vorstehenden Ansprüche; und
ein optisches Element, das so angeordnet ist, dass es das von der Lichtquelle emittierte Licht projiziert.

## Revendications

1. Ensemble électronique pour un dispositif lumineux automobile (10), l'ensemble électronique comprenant
une source lumineuse (1)
un circuit d'attaque (3) configuré pour commander le fonctionnement de la source lumineuse (1), le circuit d'attaque (3) comprenant une entrée d'alimentation du circuit d'attaque et une entrée de commande du circuit d'attaque, dans lequel la source lumineuse est connectée électriquement à l'entrée de commande du circuit d'attaque ;
une alimentation électrique (4) configurée pour fournir une alimentation électrique à la source lumineuse et au circuit d'attaque ; et
un circuit de protection d'entrée (2) disposé entre l'alimentation électrique et la source lumineuse (1), le circuit de protection d'entrée (2) étant destiné à limiter la tension et/ou le courant transitoires reçus par la source lumineuse et/ou par le pilote et comprenant une entrée de protection (21) et une sortie de protection (22)
dans lequel
l'entrée de protection (21) et la sortie de protection (22) sont reliées par l'interposition d'un groupe de résistances comprenant une résistance (23) et une diode (24) connectées en série, la diode (24) comprenant une borne d'anode et une borne cathodique,
et **caractérisé en ce que** :
la borne d'anode de la diode est connectée à l'entrée de protection directement ou par l'intermédiaire de la résistance,
un noeud entre l'entrée de protection (21) et le groupe de résistances est connecté à la masse par l'intermédiaire d'un premier condensateur (25) et
un noeud entre le groupe de résistances et la sortie de protection (22) est connecté à la masse par l'intermédiaire d'un deuxième condensateur (26).

2. Ensemble électronique selon la revendication 1, dans lequel le circuit de protection d'entrée (2) est également situé entre l'alimentation électrique et l'entrée d'alimentation du circuit d'attaque.

3. Ensemble électronique selon l'une quelconque des revendications précédentes, dans lequel le premier condensateur (25) a une valeur supérieure à 47 nF, et en particulier égale à ou supérieure à 68 nF et en particulier égale ou supérieure à 100 nF.

4. Ensemble électronique selon l'une quelconque des revendications précédentes, dans lequel le deuxième condensateur (26) a une valeur de condensateur égale ou supérieure à 2,2 pF, et en particulier égale ou supérieure à 4,7 pF

5. Ensemble électronique selon l'une quelconque des revendications précédentes, dans lequel la résistance (23) a une valeur comprise entre 10 et 40 0.

6. Ensemble électronique selon l'une quelconque des revendications précédentes, dans lequel le circuit d'attaque est un circuit d'attaque CC/CC.

7. Ensemble électronique selon l'une quelconque des revendications 1 à 5, dans lequel le circuit d'attaque est un circuit d'attaque linéaire.

8. Ensemble électronique selon l'une quelconque des revendications précédentes, dans lequel la source lumineuse est une source lumineuse à semiconducteurs.

9. Ensemble électronique selon l'une quelconque des revendications précédentes, dans lequel la source lumineuse comprend au moins une LED RVB (1).

10. Ensemble électronique selon l'une quelconque des revendications précédentes, dans lequel la résistance est située plus près de la sortie de protection que la diode.

11. Dispositif lumineux automobile (100) comprenant
un ensemble électronique selon l'une quelconque des revendications précédentes ; et
un élément optique agencé pour projeter la lumière émise par la source lumineuse.
